# EUROPEAN PATENT APPLICATION

(11) **EP 4 510 004 A1**
(43) Date of publication of application: **19.02.2025**
(21) Application number: 23838907.6
(22) Date of filing: 10.07.2023
(51) Int. Cl.: G06F 16/34

(54) **TEXT EXCERPTING METHOD AND RELATED DEVICE**

(30) Priority: 13.07.2022 CN 202210827175
(71) Applicant: Huawei Technologies Co., Ltd., Shenzhen, Guangdong 518129 (CN)
(72) Inventor: PENG, Kai, Shenzhen, Guangdong 518129 (CN)
(74) Representative: MERH-IP Matias Erny Reichl Hoffmann Patentanwälte PartG mbB
(86) International application number: PCT/CN2023/106621
(87) International publication number: WO 2024/012415

(57) **Abstract**

A text extraction method and a related device are provided. The method includes: performing screen capture on a user interface of a first application, to obtain a screenshot of the first application; displaying the screenshot at a target layer, where the target layer is above a layer at which the user interface is located; performing character recognition on the screenshot; when a character selection operation for the screenshot displayed at the target layer is detected, highlighting a selected character at the target layer; and when a drag operation for the selected character is detected, dragging the selected character to a second application. According to the method, a user can conveniently extract a text from a user interface of an electronic device. This improves text extraction efficiency.

## Description

This application claims priority to Chinese Patent Application No. 202210827175.4, filed with the China National Intellectual Property Administration on July 13, 2022 and entitled "TEXT EXTRACTION METHOD AND RELATED DEVICE", which is incorporated herein by reference in its entirety.

### TECHNICAL FIELD

This application relates to the field of terminal technologies, and in particular, to a text extraction method and a related device.

### BACKGROUND

Currently, if a user wants to extract discontinuous content (for example, a first line, a third line, and a fifth line of text) on a user interface (for example, a browser interface), the user needs to repeatedly enter and exit the extraction, to separately extract a segment of content on the user interface each time (for example, extract the first line the first time, extract the third line the second time, and extract the fifth line the third time). Consequently, text extraction efficiency is low.

### SUMMARY

Embodiments of this application provide a text extraction method and a related device, to improve text extraction efficiency.

A first aspect of this application provides a text extraction method. The method includes: performing screen capture on a user interface of a first application, to obtain a screenshot of the first application; displaying the screenshot at a target layer, where the target layer is above a layer at which the user interface is located; performing character recognition on the screenshot; when a character selection operation for the screenshot displayed at the target layer is detected, highlighting a selected character at the target layer; and when a drag operation for the selected character is detected, dragging the selected character to a second application.

According to the text extraction method provided in this application, a user can conveniently extract a text from the user interface of the first application of an electronic device to a second application, and the screenshot is displayed at the target layer. The user can extract a plurality of pieces of discontinuous content at a time. This improves text extraction efficiency.

In some optional implementations, the performing screen capture on a user interface of a first application includes: obtaining interface element information of a first page of the first application; detecting a preset control in a scrolling area of the first page based on the interface element information; determining a screenshot area based on the preset control, where the screenshot area includes a completely visible target control in the preset control; and performing screen capture on the first page based on the screenshot area, to obtain a first screenshot.

In this implementation, when performing screen capture, the electronic device determines the screenshot area based on the preset control, to avoid truncation of the preset control, and improve screenshot quality.

In some optional implementations, the preset control includes a picture control, a video control, or a character control.

In some optional implementations, the performing screen capture on a user interface of a first application further includes: determining a scrolling distance based on the screenshot area; scrolling content in the scrolling area based on the scrolling distance, to obtain a second page of the first application; and performing screen capture on the second page, to obtain a second screenshot, and stitching the first screenshot and the second screenshot, to obtain a long screenshot of the first application.

In this implementation, when performing long screen capture, the electronic device determines the scrolling distance based on the screenshot area, to avoid truncation of the preset control. When the preset control loads a dynamic picture or a video, stitching misplacement can be avoided, to improve quality of the long screenshot and text extraction.

In some optional implementations, the determining a screenshot area based on the target control includes: if the scrolling area supports vertical scrolling, an upper boundary, a left boundary, and a right boundary of the screenshot area are respectively equal to an upper boundary, a left boundary, and a right boundary of the scrolling area, and a lower boundary of the screenshot area is equal to a lower boundary of the target control that maximizes the screenshot area; or if the scrolling area supports horizontal scrolling, an upper boundary, a lower boundary, and a left boundary of the screenshot area are respectively equal to an upper boundary, a lower boundary, and a left boundary of the scrolling area, and a right boundary of the screenshot area is equal to a right boundary of the target control that maximizes the screenshot area.

In some optional implementations, the determining a scrolling distance based on the screenshot area includes: if the scrolling area supports vertical scrolling, the scrolling distance is equal to a height of the screenshot area; or if the scrolling area supports horizontal scrolling, the scrolling distance is equal to a width of the screenshot area.

In some optional implementations, the method further includes: in response to a writing operation for the screenshot displayed at the target layer, synthesizing written content corresponding to the operation and the screenshot.

In some optional implementations, before the performing screen capture on a user interface of a first application, the method further includes: detecting whether a text extraction function is enabled; and if the text extraction function is enabled, performing screen capture on the user interface of the first application.

In some optional implementations, the detecting whether a text extraction function is enabled includes: if a user operation of sliding inward from an upper right corner of a screen is detected, displaying a shortcut function menu, where the shortcut function menu includes a text extraction option; and if a selection operation for the text extraction option is detected, enabling the text extraction function.

In some optional implementations, a second aspect of this application provides a computer-readable storage medium, including computer instructions. When the computer instructions are run on an electronic device, the electronic device is enabled to perform the text extraction method according to the first aspect.

A third aspect of this application provides an electronic device. The electronic device includes a processor and a memory, the memory is configured to store instructions, and the processor is configured to invoke the instructions in the memory, so that the electronic device performs the text extraction method according to the first aspect.

A fourth aspect of this application provides a chip system. The chip system is used in an electronic device. The chip system includes an interface circuit and a processor. The interface circuit and the processor are interconnected through a line. The interface circuit is configured to receive a signal from a memory of the electronic device, and send a signal to the processor, where the signal includes computer instructions stored in the memory. When the processor executes the computer instructions, the chip system performs the text extraction method according to the first aspect.

A fifth aspect of this application provides a computer program product. When the computer program product runs on a computer, the computer is enabled to perform the text extraction method according to the first aspect.

It should be understood that the computer-readable storage medium according to the second aspect, the electronic device according to the third aspect, the chip system according to the fourth aspect, and the computer program product according to the fifth aspect all correspond to the method according to the first aspect. Therefore, for beneficial effects that can be achieved by the computer-readable storage medium according to the second aspect, the electronic device according to the third aspect, the chip system according to the fourth aspect, and the computer program product according to the fifth aspect, refer to the beneficial effects in the corresponding method provided above. Details are not described herein again.

### BRIEF DESCRIPTION OF DRAWINGS

FIG. 1 is a diagram of an application scenario of a text extraction method according to an embodiment of this application;
FIG. 2 is a flowchart of a text extraction method according to an embodiment of this application;
FIG. 3 is a flowchart of a text extraction method according to an embodiment of this application;
FIG. 4 is a diagram of a screenshot of a first application according to an embodiment of this application;
FIG. 5 is a diagram of highlighting a plurality of pieces of discontinuous content at a target layer according to an embodiment of this application;
FIG. 6A and FIG. 6B are a flowchart of a text extraction method according to another embodiment of this application;
FIG. 7 is a diagram of screenshot stitching according to an embodiment of this application;
FIG. 8 is a diagram of a long screen capture operation according to an embodiment of this application;
FIG. 9 is a diagram of performing screen capture on a scrollable interface a plurality of times according to an embodiment of this application; and
FIG. 10 is a diagram of a hardware structure of an electronic device according to an embodiment of this application.

### DESCRIPTION OF EMBODIMENTS

To ease of understanding, examples of some concepts related to embodiments of this application are described for reference.

It should be noted that, in this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists, where A and B may be singular or plural. In the specification, claims, and accompanying drawings of this application, the terms "first", "second", "third", "fourth", and the like (if existing) are intended to distinguish between similar objects but do not necessarily indicate a specific order or sequence.

To better understand a text extraction method and a related device provided in embodiments of this application, the following first describes an application scenario of the text extraction method in this application.

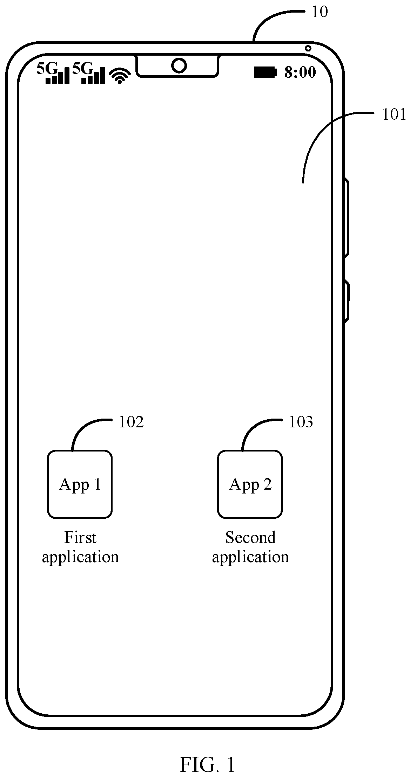

FIG. 1 is a diagram of an application scenario of a text extraction method according to an embodiment of this application.

As shown in FIG. 1, the text extraction method provided in this embodiment of this application is applied to an electronic device 10. The electronic device 10 includes a screen 101, a first application 102, and a second application 103. The screen 101 is configured to display a user interface. According to the text extraction method provided in this embodiment of this application, a user can conveniently extract a text from a user interface of the first application 102 to the second application 103. This improves text extraction efficiency.

The electronic device 10 includes but is not limited to a terminal device like a smartphone or a tablet computer. In FIG. 1, an example in which the electronic device 10 is a mobile phone is used for description. The screen 101 is a touchscreen, and the user may perform, by using a finger or a stylus, an operation on content displayed on the screen 101. The screen 101 may be a capacitive touchscreen. The capacitive touchscreen works through current induction on a human body. When a finger touches the screen 101, an electric field of the human body enables the finger and a surface of the screen 101 to form coupling capacitance. The screen 101 may alternatively be another type of touchscreen, for example, a resistive touchscreen, an infrared touchscreen, or a surface acoustic wave touchscreen.

For example, various client applications may be installed on the electronic device 10, for example, a text editing application (for example, Memo, Notepad, Calendar, or Note), an instant messaging application (for example, WeChat, QQ, or Facebook Messenger), a fitness and health application (for example, Keep, Codoon, or Boohee), a media and entertainment application (for example, iQIYI, Youku, or TikTok), and the like. The first application 102 and the second application 103 may be applications of any type.

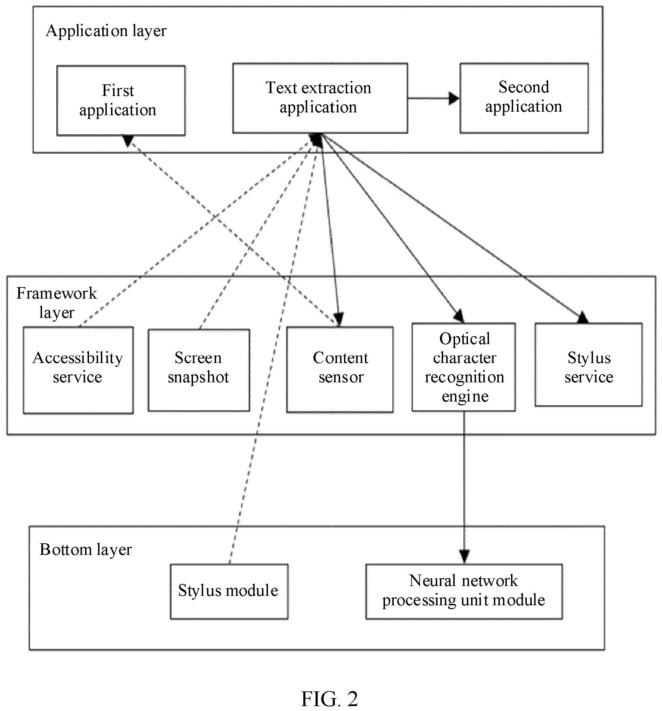

FIG. 2 is a diagram of a software structure of an electronic device according to an embodiment of this application. The electronic device may include an application layer, a framework layer, and a bottom layer from top to bottom.

In an embodiment of this application, the application layer includes a first application (for example, Browser), a text extraction application, and a second application (for example, Memo). The framework layer includes an accessibility service (AccessibilityService), a content sensor (ContentSensor), a screen snapshot (Screenshot), an optical character recognition (Optical Character Recognition, OCR) engine, and a stylus service (PencilEngine). The bottom layer includes a stylus (Touch Pen, TP) module and a neural network processing unit (Neural Network Processing Unit, NPU) module.

In this embodiment of this application, the text extraction application is configured to: implement the text extraction method provided in embodiments of this application, and extract a text from a user interface of the first application to the second application based on a user operation. The accessibility service is configured to provide interface element information (for example, a location and a size of an interface element) of the user interface of the first application for the text extraction application. The content sensor is configured to inject a scrolling event into the first application, to scroll content in a scrolling area of the first application. The screen snapshot is configured to perform screen capture on the user interface of the first application. The optical character recognition engine is configured to perform character recognition on the screenshot. The stylus service is configured to render handwritten content on the screenshot. The stylus module is configured to connect to a stylus, to provide a stylus input function. The neural network processing unit module is configured to connect to a neural network processing unit, to provide an artificial intelligence (artificial intelligence, AI) computing capability.

In the embodiment shown in FIG. 2, the text extraction application is implemented at the application layer. In another embodiment of this application, the text extraction application may be implemented at another layer, for example, the framework layer.

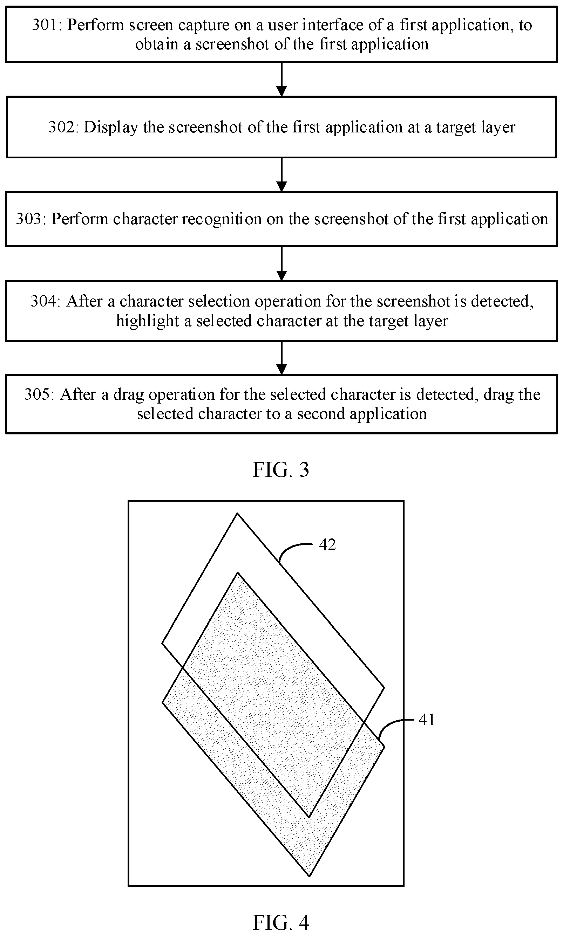

FIG. 3 is a flowchart of a text extraction method according to an embodiment of this application. The text extraction method provided in this embodiment is applied to an electronic device (for example, the electronic device 10 in FIG. 1).

301: Perform screen capture on a user interface of a first application, to obtain a screenshot of the first application.

In an embodiment of this application, the user interface of the first application is a scrollable interface, and long screen capture may be performed on the scrollable interface of the first application, to obtain a long screenshot of the first application. Content of the scrollable interface exceeds a display range of a screen, and content of different pages is viewed by using a scroll control (for example, a scroll bar). The performing long screen capture on the scrollable interface of the first application is performing screen capture on the content of different pages on the scrollable interface (that is, performing screen capture a plurality of times), and stitching a plurality of screenshots obtained by performing screen capture the plurality of times.

In this embodiment of this application, long screen capture may be performed on all pages of the scrollable interface of the first application, or long screen capture may be performed on some pages of the scrollable interface of the first application. The obtained long screenshot may include all content of the scrollable interface of the first application, or may include a part of content of the scrollable interface of the first application. For example, screen capture may be performed on the scrollable interface of the first application a preset quantity of times (for example, four times), and obtained screenshots (for example, four screenshots) are stitched, to obtain the long screenshot.

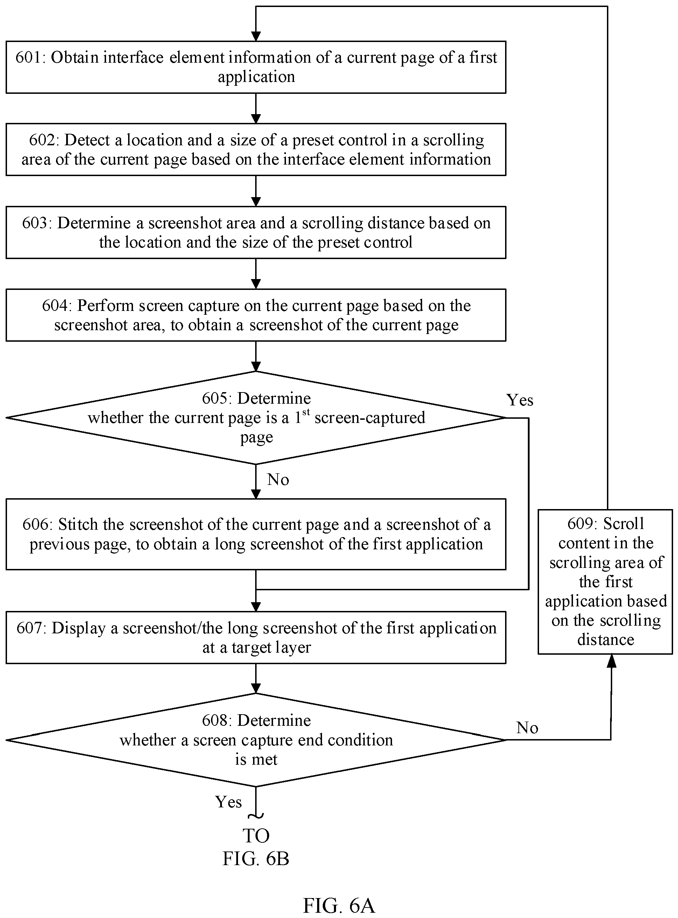

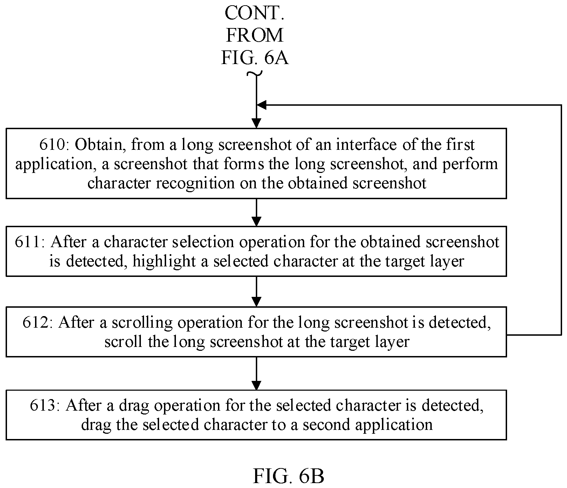

The electronic device performs long screen capture on the user interface of the first application, to obtain the long screenshot of the first application. A specific process of performing text extraction by using the long screenshot of the first application is described in detail in FIG. 6A and FIG. 6B.

In another embodiment of this application, the user interface of the first application is a non-scrollable interface, and a screenshot obtained by performing screen capture on the non-scrollable interface of the first application is a common screenshot. Content of the non-scrollable interface does not exceed the display range of the screen, and complete content may be displayed on a page.

302: Display the screenshot of the first application at a target layer, where the target layer is above a layer at which the user interface of the first application is located.

The target layer may be established above the layer at which the user interface of the first application is located, and the screenshot is displayed at the target layer.

The layer at which the user interface of the first application is located is used to display the user interface of the first application, and the target layer is used to display the screenshot of the first application. When the screenshot is displayed at the target layer, content displayed on a screen of the electronic device does not change significantly. A user performs a text extraction operation on the screenshot of the first application at the target layer, and operation experience is the same as that of performing the text extraction operation on the user interface of the first application.

FIG. 4 is a diagram of the screenshot of the first application according to an embodiment of this application. Specifically, FIG. 4 shows the screenshot of the first application displayed at the target layer. As shown in FIG. 4, 41 is the layer at which the user interface of the first application is located, 42 is the target layer, and the target layer is above the layer at which the user interface of the first application is located.

303: Perform character recognition on the screenshot of the first application.

In this embodiment of this application, the electronic device may perform character recognition on the screenshot of the first application by using an optical character recognition engine. Character recognition is performed on the screenshot of the first application by using the optical character recognition engine, to obtain a character location matrix corresponding to the screenshot of the first application and text information. The character location matrix indicates a location of each character in the screenshot of the first application.

304: After a character selection operation for the screenshot of the first application is detected, highlight a selected character at the target layer.

In an embodiment of this application, the user may use a finger or a stylus to press and hold a character and move on the character to select the character. In response to the character selection operation for the screenshot, the electronic device highlights the selected character at the target layer.

The electronic device may highlight the selected character based on the character selection operation of the user. Each time the user selects a character, the electronic device highlights the selected character.

In an embodiment of this application, the electronic device may highlight the selected character at the target layer. In another embodiment of this application, the electronic device may highlight the selected character in another manner, for example, bold or underscore the selected character.

After detecting the character selection operation for the screenshot of the first application, the electronic device determines, based on the character selection operation of the user, the character location matrix corresponding to the screenshot of the first application, and the text information, a location of the selected character at the target layer and text information corresponding to the selected character, and highlights the selected character at the target layer based on the location of the selected character at the target layer.

In this embodiment of this application, the screenshot is displayed at the target layer, and the user can select a plurality of pieces of discontinuous content from the screenshot. The electronic device may detect each character selection operation (for example, a process of each time pressing and holding a character, moving on the character, and then releasing the character is one character selection operation), and highlight the character selected each time at the target layer. If the user performs the character selection operation from the screenshot a plurality of times (for example, presses and holds a character, moves on the character, and then releases the character a plurality of times), and selects a plurality of pieces of discontinuous content, the electronic device highlights the plurality of pieces of discontinuous content at the target layer. For example, if the user selects a first line, a third line, and a fifth line of text in the screenshot, the first line, the third line, and the fifth line of text in the screenshot may be highlighted at the target layer.

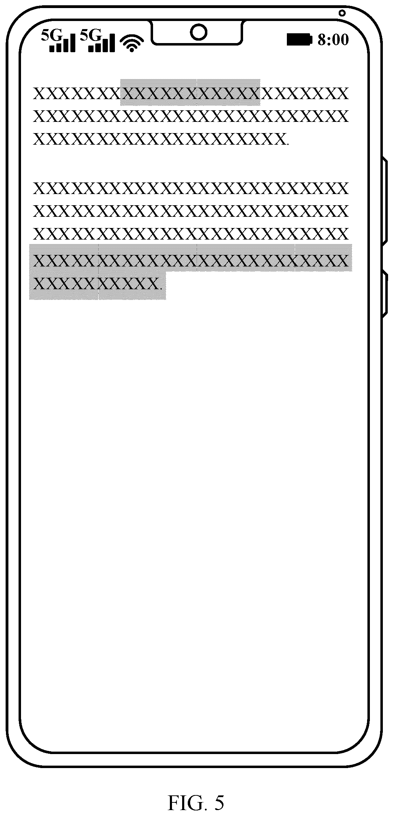

FIG. 5 is a diagram of highlighting the plurality of pieces of discontinuous content at the target layer according to an embodiment of this application. Specifically, according to the text extraction method, the selected plurality of pieces of discontinuous content may be highlighted at the target layer. As shown in FIG. 5, the user selects two segments of discontinuous content from the screenshot, and the two segments of selected content are highlighted.

In an embodiment of this application, after highlighting the selected character at the target layer, the electronic device may detect whether the user performs an operation of canceling character selection. If it is detected that the user performs the operation of canceling character selection, the selected character is deselected. The selected character is restored to normal display (that is, the character is not highlighted) after being deselected.

The user may deselect some selected characters. For example, if it is detected that the user taps a segment of selected characters in the screenshot, the segment of selected characters is deselected. For another example, if it is detected that the user performs the character selection operation again on the selected character (for example, presses and holds the character, moves on the character, and then releases the character again), the character selected again is deselected.

The user may alternatively deselect all selected characters. For example, if it is detected that the user taps a blank area of the screenshot, all the selected characters are deselected.

305: After a drag operation for the selected character is detected, drag the selected character to a second application.

As described above, after detecting the character selection operation for the screenshot, the electronic device determines, based on the character selection operation of the user, the text information corresponding to the selected character. After detecting the drag operation for the selected character, the electronic device drags the selected character to the second application based on the determined text information.

The dragging the selected character to the second application is duplicating the selected character to the second application.

In an embodiment of this application, the user may touch and hold (for example, touch and hold for 700 milliseconds to 900 milliseconds) the selected character, drag the selected character to the second application, and then release the selected character. In response to the drag operation for the selected character, the electronic device drags the selected character to the second application.

In an embodiment of this application, both the screenshot of the first application and a user interface of the second application may be displayed on the screen of the electronic device. For example, the electronic device is a tablet computer, and the screenshot of the first application and the user interface of the second application may be displayed on a screen of the tablet computer in a left-and-right split-screen manner. For another example, the electronic device is a mobile phone, and the screenshot of the first application and the user interface of the second application may be displayed on a screen of the mobile phone in an up-and-down split-screen manner. For still another example, the screenshot of the first application may be displayed in full screen on the screen of the electronic device, and the user interface of the second application may be displayed in a floating window. The user may touch and hold the selected character, drag the selected character from the screenshot of the first application to the user interface of the second application, and then release the selected character. In response to the drag operation for the selected character, the electronic device drags the selected character to the second application.

In another embodiment of this application, the screenshot of the first application may be displayed on the screen of the electronic device, and the user interface of the second application is displayed based on a user operation for the screenshot of the first application. For example, if it is detected that the selected character is dragged to an edge of the screen of the electronic device, a home screen of the electronic device may be displayed (which may be displayed in full screen or may be displayed in a floating window). The home screen of the electronic device includes an icon of the second application. If the user drags the selected character to the icon of the second application interface on the home screen, the second application is started, and the user interface of the second application is displayed. If the user drags the selected character to the user interface of the second application and then releases the selected character, the selected character is dragged to the second application. For another example, if it is detected that the selected character is dragged to the edge of the screen of the electronic device, an application that has been started on the electronic device may be displayed, where the started application includes the second application. If the user drags the selected character to the icon of the second application interface on the home screen, the second application is started, and the user interface of the second application is displayed. If the user drags the selected character to the second application in the started application, the user interface of the second application is displayed. If the user drags the selected character to the user interface of the second application and then releases the selected character, the selected character is dragged to the second application.

There may be a plurality of second applications. For example, user interfaces of the plurality of second applications may be displayed on the screen of the electronic device in a split-screen manner or displayed in a floating window, and the user may drag the selected character to a required second application.

In this embodiment of this application, the user may drag the selected character to any location at which text input may be performed. For example, the second application is WeChat, and the user may drag the selected character to an input box on a chat interface of WeChat. For another example, the second application is Notepad or Memo, and the user may drag the selected character to an editing box of Notepad or Memo. For still another example, the second application is Browser, and the user may drag the selected character to a search box of Browser.

If the user selects a plurality of pieces of discontinuous content from the screenshot, after detecting the drag operation for the selected character, the electronic device may drag the selected character to the second application at a time. For example, if the user extracts a first line, a third line, and a fifth line of content in the screenshot, and after detecting the drag operation for the selected character, the electronic device may drag the first line, the third line, and the fifth line of content to the second application at a time.

In an embodiment of this application, when the user drags the selected character to the second application, an animation in which the selected character moves with the dragging may be displayed at the target layer.

In an embodiment of this application, after detecting a writing operation for the screenshot displayed at the target layer, the electronic device synthesizes written content and the screenshot. A writing operation button/control may be displayed at the target layer. If it is detected that the user taps the writing operation button/control, the electronic device enters screenshot writing, detects the written content of the user at the target layer, and synthesizes the written content and the screenshot. Alternatively, the written content of the user at the target layer may be directly detected (there is no need to tap the writing operation button/control), and the written content and the screenshot may be synthesized. The synthesizing the written content and the screenshot is superimposing the written content and the screenshot to generate a new image. The electronic device may synthesize the written content and the screenshot through a stylus service.

The electronic device may store the synthesized image, for example, store the synthesized image in a memory of the electronic device. For example, after entering the screenshot writing, the electronic device may display a save button/control at the target layer, and if it is detected that the user taps the save button/control, store the synthesized image.

In an embodiment of this application, after the electronic device enters the screenshot writing, transparency of a brush may be set, for example, the brush is set to a semi-transparent state, to ensure that screenshot content is not blocked by the written content.

According to the embodiment shown in FIG. 3, the user can conveniently extract a text from the user interface of the first application of the electronic device to the second application. The user can extract a plurality of pieces of discontinuous content at a time. This improves text extraction efficiency.

FIG. 6A and FIG. 6B are a flowchart of a text extraction method according to another embodiment of this application. The text extraction method provided in this embodiment is applied to an electronic device (for example, the electronic device 10 in FIG. 1). In the embodiment shown in FIG. 6A and FIG. 6B, the electronic device performs long screen capture on a user interface of a first application, to obtain a long screenshot of the first application, and performs text extraction by using the long screenshot of the first application.

601: Obtain interface element information of a current page of the first application.

The obtained interface element information is information about an interface element on the current page of the first application.

The interface element (interface element) may be a series of elements on a user interface that meet a user interaction requirement. The interface element includes a window, a dialog box, a menu, a scroll bar, a graph, and the like.

In this embodiment of this application, before performing the text extraction method provided in this embodiment of this application, the electronic device may detect whether a text extraction function is enabled. If the text extraction function is enabled, the text extraction method provided in this embodiment of this application is performed.

In an embodiment of this application, the electronic device may detect whether a user performs a preset operation. If it is detected that the user performs the preset operation, the text extraction function is enabled. For example, if it is detected that the user slides inward from an upper right corner of a screen by using a finger or a stylus, the electronic device displays a shortcut function menu, where the shortcut function menu includes a text extraction option. If it is detected that the user selects (for example, taps) the text extraction option in the shortcut function menu, the text extraction function is enabled. For another example, if it is detected that the user taps a text extraction icon, the text extraction function is enabled.

In an embodiment of this application, after the text extraction function is enabled, the electronic device detects whether the user performs a text extraction trigger operation. If it is detected that the user performs the text extraction trigger operation, the electronic device obtains the interface element on the current page of the first application. The user may trigger text extraction by using a finger or a stylus. For example, the user may perform the text extraction trigger operation on the current page of the first application (for example, touch and hold a character on the current page) by using a finger or a stylus, to trigger the text extraction.

In an embodiment of this application, the electronic device may obtain the interface element information of the current page of the first application through an accessibility service. After detecting the text extraction trigger operation, a text extraction application registers accessibility listening with the accessibility service, and the accessibility service returns the interface element information of the current page to the text extraction application.

602: Detect a location and a size of a preset control in a scrolling area of the current page based on the interface element information.

The scrolling area may be implemented by using a scroll control. The scroll control is used to scroll the user interface. For example, the scroll control may include Webview, ScrollView, and RecycleView.

The scroll control limits a fixed scrolling area, and the scrolling area includes one or more controls that can be scrolled. Different controls are used to load different interface elements.

In an embodiment of this application, the preset control includes a picture control and a video control. The picture control can be a picture control for loading a dynamic picture or any picture control.

In another embodiment of this application, the preset control includes a character control, a picture control, and a video control.

603: Determine a screenshot area and a scrolling distance based on the location and the size of a preset control.

In an embodiment of this application, the electronic device determines a completely visible target control from the preset control, and determines the screenshot area based on a location and a size of the target control. Specifically, if the scrolling area supports vertical scrolling, an upper boundary, a left boundary, and a right boundary of the screenshot area are respectively equal to an upper boundary, a left boundary, and a right boundary of the scrolling area, and a lower boundary of the screenshot area is equal to a lower boundary of the target control that maximizes the screenshot area. If the scrolling area supports horizontal scrolling, an upper boundary, a lower boundary, and a left boundary of the screenshot area are respectively equal to an upper boundary, a lower boundary, and a left boundary of the scrolling area, and a right boundary of the screenshot area is equal to a right boundary of the target control that maximizes the screenshot area.

After the screenshot area is determined, the scrolling distance may be determined based on the screenshot area. In an embodiment of this application, if the scrolling area supports vertical scrolling, the scrolling distance is equal to a height of the screenshot area. If the scrolling area supports horizontal scrolling, the scrolling distance is equal to a width of the screenshot area.

In this embodiment of this application, the calculated scrolling distance and screenshot area can avoid truncation of a preset interface element (for example, a character, a picture, or a video) when a screenshot is taken.

604: Perform screen capture on the current page based on the screenshot area, to obtain a screenshot of the current page.

For example, the scrolling area supports vertical scrolling. After it is determined that the upper boundary, the left boundary, and the right boundary of the screenshot area are respectively equal to the upper boundary, the left boundary, and the right boundary of the scrolling area, and the lower boundary of the screenshot area is equal to the lower boundary of the target control that maximizes the screenshot area, screen capture is performed on the current page based on the determined upper boundary, lower boundary, left boundary, and right boundary of the screenshot area.

601 to 604 use an example in which the user interface of the first application is a scrollable interface to describe how to perform screen capture on the current page. It should be understood that, if the user interface of the first application is a non-scrollable interface, screen capture may also be performed on the current page by using a same method (if the user interface of the first application is a non-scrollable interface, there is no need to determine the scrolling distance), to avoid truncation of the preset interface element when the screenshot is taken.

605: Determine whether the current page is a 1^{st} screen-captured page. If the current page is the 1^{st} screen-captured page, perform 607.

If the current page is not the 1^{st} screen-captured page, perform 606: Stitch the screenshot of the current page and a screenshot of a previous page, to obtain a long screenshot of the first application.

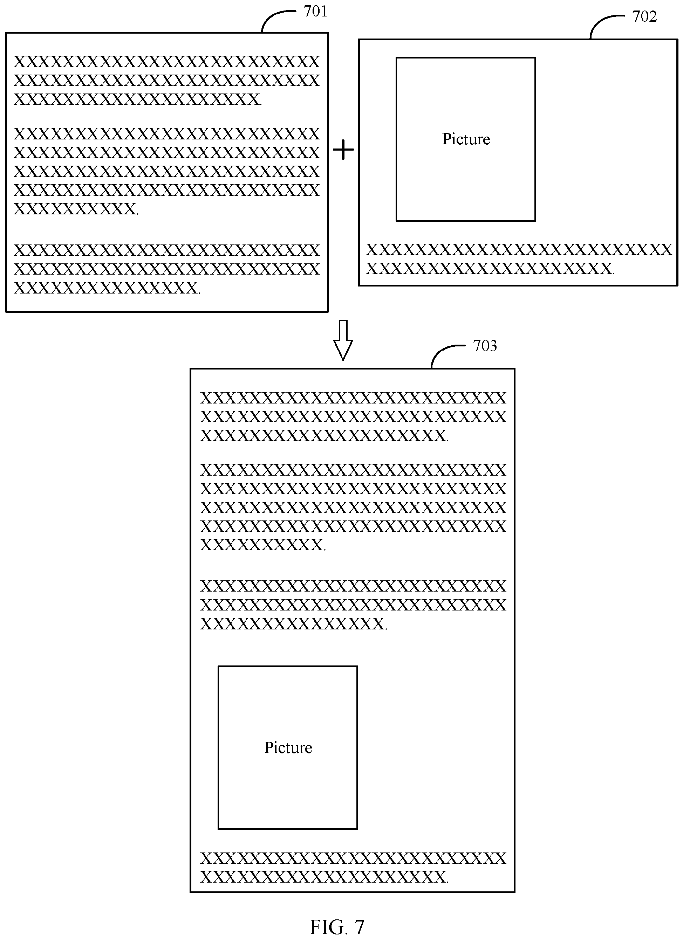

FIG. 7 is a diagram of screenshot stitching according to an embodiment of this application. As shown in FIG. 7, 701 is the screenshot of the previous page, 702 is the screenshot of the current page, and 703 is a new screenshot (that is, the long screenshot) obtained by stitching the screenshot of the current page and the screenshot of the previous page.

607: Display a screenshot/the long screenshot of the first application at a target layer, where the target layer is above a layer at which the user interface of the first application is located.

If the current page is the 1^{st} screen-captured page, the electronic device establishes the target layer above the layer at which the user interface of the first application is located, and displays the screenshot of the current page at the target layer. If the current page is not the 1^{st} screen-captured page, the electronic device displays, at the target layer, the long screenshot obtained through stitching.

608: Determine whether a screen capture end condition is met.

It may be determined whether a quantity of times of screen capture reaches a preset quantity of times, or whether a bottom of the user interface of the first application is reached. If the quantity of times of screen capture reaches the preset quantity of times, or the bottom of the user interface of the first application is reached, the screen capture end condition is met.

If the screen capture end condition is not met, perform 609: Scroll content in the scrolling area of the first application based on the scrolling distance; and return to 601.

In this embodiment of this application, the text extraction application may inject, into the first application through an interface of the scroll control, a scrolling event that carries the scrolling distance, so that the first application scrolls content in the scrolling area of the first application based on the scrolling distance. For example, the scrolling event that carries the scrolling distance may be injected into the first application through a ScrollBy interface of the scroll control, so that the first application scrolls the content in the scrolling area of the first application based on the scrolling distance.

After 601 to 609 are cyclically performed, the electronic device obtains a long screenshot of an interface of the first application.

In the embodiment shown in FIG. 6A and FIG. 6B, after performing screen capture to obtain a new screenshot, the electronic device stitches the new screenshot and the previous screenshot. In another embodiment of this application, the electronic device may perform screen capture a plurality of times to obtain a plurality of screenshots, and then stitch the plurality of screenshots.

If the screen capture end condition is met, perform 610: Obtain, from the long screenshot of the interface of the first application, a screenshot that forms the long screenshot, and perform character recognition on the obtained screenshot.

The screenshot obtained from the long screenshot of the interface of the first application is the screenshot obtained in 604.

The electronic device may obtain a screenshot starting from a 1^{st} screenshot that forms the long screenshot of the interface of the first application.

In this embodiment of this application, the electronic device may perform character recognition on the obtained screenshot by using an optical character recognition engine. Character recognition is performed on the obtained screenshot by using the optical character recognition engine, to obtain a character location matrix corresponding to the obtained screenshot and text information. The character location matrix is used to indicate a location of each character in the obtained screenshot.

611: After a character selection operation for the obtained screenshot is detected, highlight a selected character at the target layer.

In an embodiment of this application, the user may use a finger or a stylus to press and hold a screen and move on the screen to select the character. In response to the character selection operation for the obtained screenshot, the electronic device highlights the selected character at the target layer.

As described above, after detecting the character selection operation for the screenshot of the first application, the electronic device determines, based on the character selection operation of the user, the character location matrix corresponding to the screenshot of the first application, and the text information, a location of the selected character at the target layer and text information corresponding to the selected character, and highlights the selected character at the target layer based on the location of the selected character at the target layer.

In an embodiment of this application, the electronic device may highlight the selected character at the target layer.

Because the screenshot is displayed at the target layer, the user may extract a plurality of pieces of discontinuous content from the screenshot, for example, may extract a first line, a third line, and a fifth line of content in the screenshot.

612: After a scrolling operation is detected, scroll the long screenshot of the interface of the first application at the target layer, and return to 610.

613: After a drag operation for the selected character is detected, drag the selected character to a second application.

In an embodiment of this application, the user may touch and hold the selected character and drag the selected character to the second application. In response to the drag operation for the selected character, the electronic device drags the selected character to the second application.

As described above, the user may drag the selected character to any location at which text input can be performed. For example, the second application is WeChat, and the user may drag the selected character to an input box on a chat interface of WeChat. For another example, the second application is Notepad or Memo, and the user may drag the selected character to an editing box of Notepad or Memo. For still another example, the second application is Browser, and the user may drag the selected character to a search box of Browser.

If the user selects a plurality of pieces of discontinuous content from the screenshot, after detecting the drag operation for the selected character, the electronic device may drag the selected characters to the second application at a time. For example, if the user extracts a first line, a third line, and a fifth line of content in the screenshot, and after detecting the drag operation for the selected character, the electronic device may drag the first line, the third line, and the fifth line of content to the second application at a time.

613: After a writing operation for the long screenshot displayed at the target layer is detected, synthesize written content and the long screenshot.

The synthesizing the written content and the long screenshot is superimposing the written content and the long screenshot to generate a new long screenshot.

The electronic device may synthesize the written content and the screenshot through the stylus service. The electronic device may store the synthesized image, for example, store the synthesized image in a memory of the electronic device.

In the embodiment shown in FIG. 6A and FIG. 6B, the user can conveniently extract a text from the user interface of the first application of the electronic device to the second application. The user can extract a plurality of pieces of discontinuous content at a time. This improves text extraction efficiency.

In addition, in an existing solution, when long screen capture is performed, a fixed scrolling distance is used, or a picture difference generated before and after scrolling is detected, and the scrolling distance is calculated based on the picture difference generated before and after scrolling. In the existing solution, a problem of stitching misplacement that occurs in a dynamic picture or a video may be encountered. In the embodiment shown in FIG. 6A and FIG. 6B, when performing long screen capture, the electronic device determines the screenshot area and the scrolling distance based on the location and the size of the preset control, to avoid truncation of the preset control. When the preset control loads a dynamic picture or a video, stitching misplacement can be avoided, to improve quality of the long screenshot and text extraction.

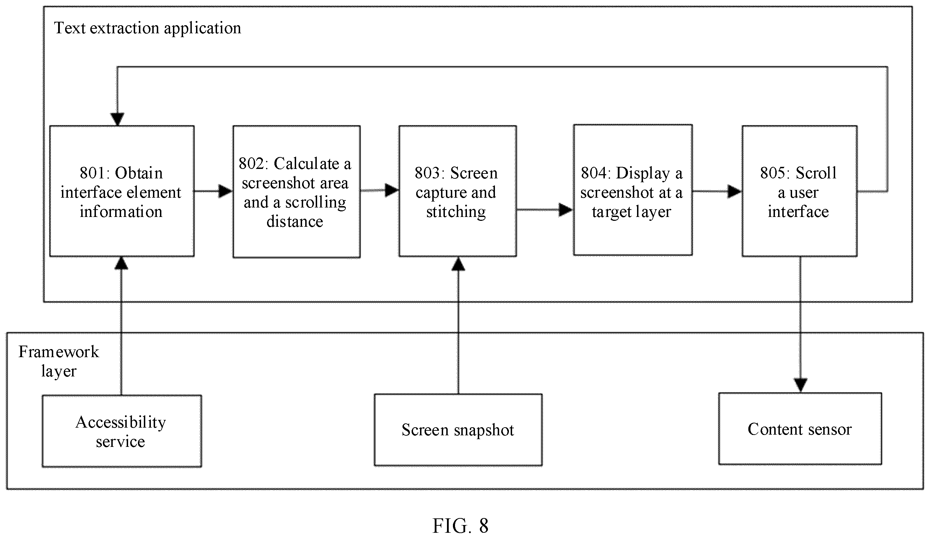

FIG. 8 is a diagram of a long screen capture operation according to an embodiment of this application. In FIG. 8, a text extraction application performs long screen capture through an accessibility service, a screen snapshot, and a content sensor.

As shown in FIG. 8, that the text extraction application performs long screen capture includes steps 801 to 805. 801: The text extraction application obtains interface element information of a current page of a first application through the accessibility service. 802: The text extraction application calculates a screenshot area and a scrolling distance based on the interface element information (including detecting a location and a size of a preset control in the scrolling area of the current page based on the interface element information, and determining the screenshot area and the scrolling distance based on the location and the size of the preset control). 803: The text extraction application performs screen capture on the current page based on the screenshot area through the screen snapshot, and when the current page is not a 1^{st} screen-captured page, stitches a screenshot of the current page and a screenshot of a previous page. 804: The text extraction application displays a screenshot at a target layer. 805: The text extraction application injects a scrolling event that carries the scrolling distance into the first application through the content sensor, so that the user interface of the first application is scrolled based on the scrolling distance, and then returns to 801.

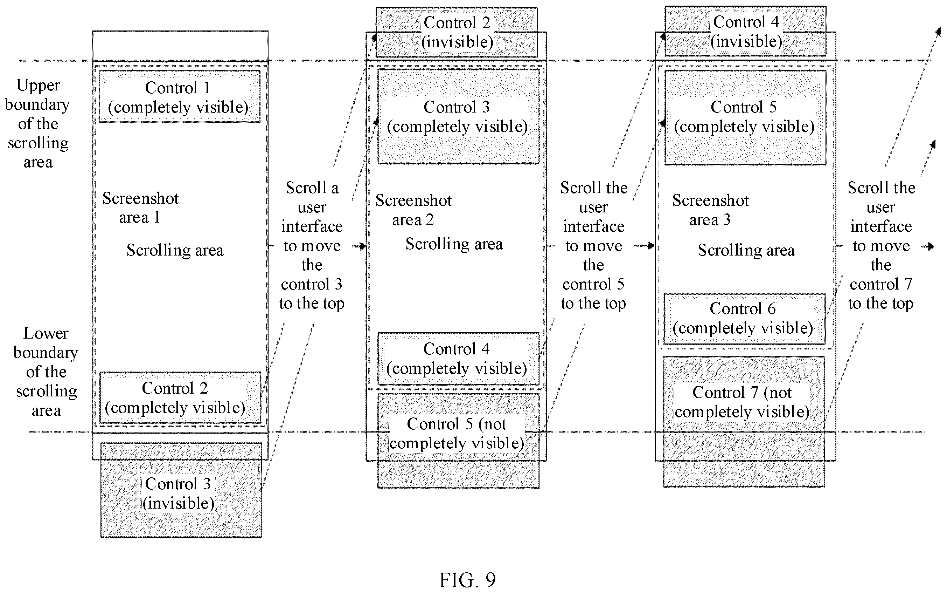

FIG. 9 is a diagram of performing screen capture on a scrollable interface a plurality of times according to an embodiment of this application.

In FIG. 9, a screenshot area (including three screenshot areas: a screenshot area 1, a screenshot area 2, and a screenshot area 3 in FIG. 9) is represented by a dashed box, and a scrolling area is represented by a solid box defined by an upper boundary of the scrolling area and a lower boundary of the scrolling area. A size of the screenshot area is not fixed, and a size of the scrolling area is fixed.

As shown in FIG. 9, when screen capture is performed for the first time, a control 1 and a control 2 are completely visible, and a lower boundary of the screenshot area 1 is equal to a lower boundary of the control 2. After screen capture is performed on the screenshot area 1, content in the scrolling area is scrolled, so that a control 3 is moved to the top of the scrolling area. When screen capture is performed for the second time, a control 3 and a control 4 are completely visible, and a lower boundary of the screenshot area 2 is equal to a lower boundary of the control 4. After screen capture is performed on the screenshot area 2, content in the scrolling area is scrolled, so that a control 5 is moved to the top of the scrolling area. When screen capture is performed for the third time, a control 5 and a control 6 are completely visible, and a lower boundary of the screenshot area 3 is equal to a lower boundary of the control 6. After screen capture is performed on the screenshot area 3, content in the scrolling area is scrolled, so that a control 7 is moved to the top of the scrolling area.

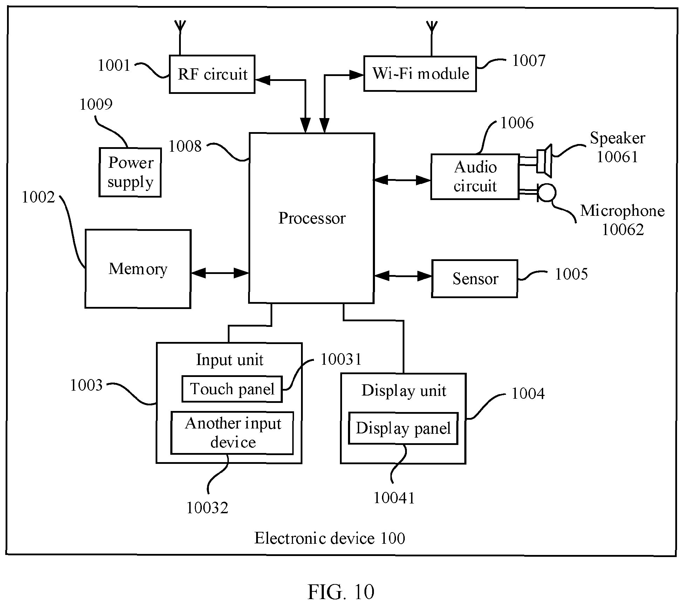

FIG. 10 is a diagram of a hardware structure of an electronic device according to an embodiment of this application. As shown in FIG. 10, an electronic device 100 may include components such as a radio frequency (Radio Frequency, RF) circuit 1001, a memory 1002, an input unit 1003, a display unit 1004, a sensor 1005, an audio circuit 1006, a Wi-Fi module 1007, a processor 1008, and a power supply 1009. A person skilled in the art may understand that the structure shown in FIG. 10 constitutes no limitation on the electronic device 100, and the electronic device 100 may include more or fewer components than those shown in the figure, or combine some components, or have different component arrangements.

The RF circuit 1001 may be configured to receive and send a signal in an information receiving and sending process or in a call process. Particularly, after receiving downlink information of a base station, the RF circuit 1001 delivers the downlink information to the processor 1008 for processing, and sends uplink data to the base station. Usually, the RF circuit 1001 includes but is not limited to an antenna, at least one amplifier, a transceiver, a coupler, a low noise amplifier (Low Noise Amplifier, LNA), a duplexer, and the like.

The memory 1002 may be configured to store a software program and a module. The processor 1008 runs the software program and the module that are stored in the memory 1002, to execute various functional applications of the electronic device 100 and perform data processing. The memory 1002 may mainly include a program storage area and a data storage area. The program storage area may store an operating system, an application required by at least one function (for example, a sound playing function and an image playing function), and the like. The data storage area may store data (for example, audio data and a phone book) created based on use of the electronic device 100, and the like. In addition, the memory 1002 may include a high-speed random access memory, and may further include a non-volatile memory, such as at least one magnetic disk storage device, a flash memory device, or another volatile solid-state storage device.

The input unit 1003 may be configured to receive entered digital or character information, and generate a key signal input related to a user setting and function control of the electronic device 100. Specifically, the input unit 1003 may include a touch panel 10031 and another input device 10032. The touch panel 10031, also referred to as a screen, may collect a touch operation (for example, an operation performed by a user on the touch panel 10031 or near the touch panel 10031 by using any proper object or accessory such as a finger or a stylus) performed by the user on or near the touch panel 10031, and drive a corresponding connection apparatus based on a preset program. Optionally, the touch panel 10031 may include two parts: a touch detection apparatus and a touch controller. The touch detection apparatus detects a touch orientation of the user, detects a signal brought by the touch operation, and transfers the signal to the touch controller. The touch controller receives touch information from the touch detection apparatus, converts the touch information into touch point coordinates, then sends the touch point coordinates to the processor 1008, and receives and executes a command sent from the processor 1008. In addition, the touch panel 10031 may be implemented by using a plurality of types, such as a resistive type, a capacitive type, an infrared ray type, and a surface acoustic wave type. In addition to the touch panel 10031, the input unit 1003 may include the another input device 10032. Specifically, the another input device 10032 may include but be not limited to one or more of a physical keyboard, a functional key (such as a volume control key or an on/off key), a trackball, a mouse, or a joystick.

The display unit 1004 may be configured to display information entered by the user or information provided for the user, and various menus of the electronic device 100. The display unit 1004 may include a display panel 10041. Optionally, the display panel 10041 may be configured in a form of a liquid crystal display (Liquid Crystal Display, LCD), an organic light-emitting diode (Organic Light-Emitting Diode, OLED), or the like. Further, the touch panel 10031 may cover the display panel 10041. When detecting a touch operation on or near the touch panel 10031, the touch panel 10031 transfers the touch operation to the processor 1008 to determine a type of a touch event, and then the processor 1008 provides a corresponding visual output on the display panel 10041 based on the type of the touch event. Although the touch panel 10031 and the display panel 10041 are used as two independent components in FIG. 10 to implement input and output functions of the electronic device 100, in some embodiments, the touch panel 10031 and the display panel 10041 may be integrated to implement the input and output functions of the electronic device 100.

The electronic device 100 may further include at least one sensor 1005, for example, a light sensor, a motion sensor, and another sensor. Specifically, the light sensor may include an ambient light sensor and a proximity sensor. The ambient light sensor may adjust luminance of the display panel 10041 based on brightness of ambient light. The proximity sensor may turn off the display panel 10041 and/or backlight when the electronic device 100 moves to an ear. As a type of the motion sensor, an accelerometer sensor may detect values of acceleration in all directions (usually, three axes), may detect a value and a direction of gravity when the accelerometer sensor is static, and may be used in an application for recognizing a posture (such as switching between landscape mode and portrait mode, a related game, or magnetometer posture calibration) of the electronic device 100, a function related to vibration recognition (such as a pedometer or a knock), or the like. In addition, other sensors such as a gyroscope, a barometer, a hygrometer, a thermometer, or an infrared sensor may be further configured in the electronic device 100. Details are not described herein.

The audio circuit 1006, a speaker 10061, and a microphone 10062 may provide an audio interface between the user and the electronic device 100. The audio circuit 1006 may convert received audio data into an electrical signal and then transmit the electrical signal to the speaker 10061, and the speaker 10061 converts the electrical signal into a sound signal for output. In addition, the microphone 10062 converts a collected sound signal into an electrical signal. The audio circuit 1006 receives the electrical signal, converts the electrical signal into audio data, and then outputs the audio data to the processor 1008 for processing, to send the audio data to, for example, another electronic device through the RF circuit 1001, or outputs the audio data to the memory 1002 for further processing.

Wi-Fi is a short distance wireless transmission technology. The electronic device 100 may help, through the Wi-Fi module 1007, the user receive and send an email, browse a web page, access streaming media, and the like. This provides wireless broadband internet access for the user. Although FIG. 10 shows the Wi-Fi module 1007, it may be understood that the Wi-Fi module 1007 is not a mandatory component of the electronic device 100, and may be omitted based on a requirement without changing the essence of the present invention.

The processor 1008 is a control center of the electronic device 100, is connected to all parts of the entire electronic device 100 by using various interfaces and lines, and executes various functions of the electronic device 100 and data processing by running or executing the software program and/or the module stored in the memory 1002 and invoking data stored in the memory 1002, to perform overall monitoring on the electronic device 100. Optionally, the processor 1008 may include one or more processing units. Preferably, the processor 1008 may integrate an application processor and a modem. The application processor mainly processes an operating system, a user interface, an application, and the like. The modem mainly processes wireless communication. It may be understood that the foregoing modem processor may alternatively not be integrated into the processor 1008.

The electronic device 100 further includes the power supply 1009 (for example, a battery) that supplies power to the components. Optionally, the power supply may be logically connected to the processor 1008 by using a power management system, to implement functions such as charge management, discharge management, and power consumption management by using the power management system.

Although not shown, the electronic device 100 may further include a camera, a Bluetooth module, and the like. Details are not described herein.

The electronic device described in FIG. 10 may be configured to implement some or all procedures in the method embodiments of this application. For details, refer to related descriptions in the foregoing method embodiments. Details are not described herein again.

In another embodiment of this application, another operating system like iOS or Linux may be installed on the electronic device.

An embodiment further provides a computer storage medium. The computer storage medium stores computer instructions. When the computer instructions are run on an electronic device, the electronic device is enabled to perform the foregoing related method steps, to implement the text extraction method in the foregoing embodiments.

This embodiment further provides a computer program product. When the computer program product runs on an electronic device, the electronic device is enabled to perform the related steps, to implement the text extraction method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the text extraction method in the foregoing method embodiments.

The electronic device, the computer storage medium, the computer program product, or the chip provided in the embodiments is configured to perform the corresponding method provided above. Therefore, for beneficial effects that can be achieved by the electronic device, the computer storage medium, the computer program product, or the chip, refer to the beneficial effects in the corresponding method provided above. Details are not described herein.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division of the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate. A component displayed as a unit may be one or more physical units, that is, may be located in one place, or may be distributed in a plurality of different places. Some or all of the units may be selected based on actual requirements to achieve the objectives of the solutions in embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of this application essentially, or the part contributing to the conventional technology or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A text extraction method, wherein the method comprises:
performing screen capture on a user interface of a first application, to obtain a screenshot of the first application;
displaying the screenshot at a target layer, wherein the target layer is above a layer at which the user interface is located;
performing character recognition on the screenshot;
when a character selection operation for the screenshot displayed at the target layer is detected, highlighting a selected character at the target layer; and
when a drag operation for the selected character is detected, dragging the selected character to a second application.

2. The text extraction method according to claim 1, wherein the performing screen capture on a user interface of a first application comprises:
obtaining interface element information of a first page of the first application;
detecting a preset control in a scrolling area of the first page based on the interface element information;
determining a screenshot area based on the preset control, wherein the screenshot area comprises a completely visible target control in the preset control; and
performing screen capture on the first page based on the screenshot area, to obtain a first screenshot.

3. The text extraction method according to claim 2, wherein the preset control comprises a picture control, a video control, or a character control.

4. The text extraction method according to claim 2 or 3, wherein the performing screen capture on a user interface of a first application further comprises:
determining a scrolling distance based on the screenshot area;
scrolling content in the scrolling area based on the scrolling distance, to obtain a second page of the first application; and
performing screen capture on the second page, to obtain a second screenshot, and stitching the first screenshot and the second screenshot, to obtain a long screenshot of the first application.

5. The text extraction method according to any one of claims 2 to 4, wherein the determining a screenshot area based on the target control comprises:
if the scrolling area supports vertical scrolling, an upper boundary, a left boundary, and a right boundary of the screenshot area are respectively equal to an upper boundary, a left boundary, and a right boundary of the scrolling area, and a lower boundary of the screenshot area is equal to a lower boundary of the target control that maximizes the screenshot area; or
if the scrolling area supports horizontal scrolling, an upper boundary, a lower boundary, and a left boundary of the screenshot area are respectively equal to an upper boundary, a lower boundary, and a left boundary of the scrolling area, and a right boundary of the screenshot area is equal to a right boundary of the target control that maximizes the screenshot area.

6. The text extraction method according to claim 4 or 5, wherein the determining a scrolling distance based on the screenshot area comprises:
if the scrolling area supports vertical scrolling, the scrolling distance is equal to a height of the screenshot area; or
if the scrolling area supports horizontal scrolling, the scrolling distance is equal to a width of the screenshot area.

7. The text extraction method according to any one of claims 1 to 6, wherein the method further comprises:
in response to a writing operation for the screenshot displayed at the target layer, synthesizing written content corresponding to the operation and the screenshot.

8. The text extraction method according to any one of claims 1 to 7, wherein before the performing screen capture on a user interface of a first application, the method further comprises:
detecting whether a text extraction function is enabled; and
if the text extraction function is enabled, performing screen capture on the user interface of the first application.

9. The text extraction method according to claim 8, wherein the detecting whether a text extraction function is enabled comprises:
if a user operation of sliding inward from an upper right corner of a screen is detected, displaying a shortcut function menu, wherein the shortcut function menu comprises a text extraction option; and
if a selection operation for the text extraction option is detected, enabling the text extraction function.

10. A computer-readable storage medium, comprising computer instructions, wherein when the computer instructions are run on an electronic device, the electronic device is enabled to perform the text extraction method according to any one of claims 1 to 9.

11. An electronic device, wherein the electronic device comprises a processor and a memory, the memory is configured to store instructions, and the processor is configured to invoke the instructions in the memory, so that the electronic device performs the text extraction method according to any one of claims 1 to 9.
